# EUROPEAN PATENT SPECIFICATION

(11) **EP 3 309 275 B1**
(45) Date of publication and mention of the grant of the patent: **01.04.2020**
(21) Application number: 16899214.7
(22) Date of filing: 18.10.2016
(51) Int. Cl.: C22C 38/04, C22C 38/02, C22C 38/32, C22C 38/00, C21D 9/46, C21D 6/00, C21D 8/02

(54) **PRESSURE VESSEL STEEL PLATE RESISTANT AGAINST HYDROGEN-INDUCED CRACKING AND MANUFACTURING METHOD THEREOF**
GEGEN WASSERSTOFFINDUZIERTE RISSBILDUNG BESTÄNDIGE STAHLPLATTE EINES DRUCKBEHÄLTERS UND HERSTELLUNGSVERFAHREN DAFÜR
TÔLE DE RÉCIPIENT SOUS PRESSION RÉSISTANT À UNE FISSURATION INDUITE PAR L'HYDROGÈNE ET SON PROCÉDÉ DE FABRICATION

(30) Priority: 19.04.2016 CN 201610241719
(43) Date of publication of application: 18.04.2018
(73) Proprietor: Jiangyin Xingcheng Special Steel Works Co., Ltd, Jiangyin, Jiangsu 214429 (CN)
(72) Inventor: LIU, Haikuan, Jiangyin Jiangsu 214429 (CN); LI, Jingtao, Jiangyin Jiangsu 214429 (CN); GAO, Zhuzhong, Jiangyin Jiangsu 214429 (CN); ZHANG, Jian, Jiangyin Jiangsu 214429 (CN); YUN, Pengcheng, Jiangyin Jiangsu 211429 (CN); ZHANG, Jun, Jiangyin Jiangsu 211429 (CN)
(74) Representative: Huang, Liwei
(86) International application number: PCT/CN2016/102379
(87) International publication number: WO 2017/181630

(56) References cited:
- EP-A1- 2 980 238
- CN-A- 102 080 183
- CN-A- 102 127 719
- CN-A- 102 345 049
- CN-A- 105 886 909
- CN-B- 102 653 846
- JP-B2- 3 520 818

## Description

### Technical Field

The invention belongs to the field of steel plate manufacturing, in particular to a thickness of 50mm SA516Gr70 (HIC) pressure vessel steel plate which is resistant to hydrogen induced cracking (HIC), and manufacturing method thereof.

### Background

SA516Gr70 (HIC) steel plate is mainly used in petroleum and chemical equipment used in wet H2S corrosion environment. Hydrogen induced cracking is a common failure mode in wet hydrogen sulfide environment, H2S reacts with steel surface to generate hydrogen atoms, the hydrogen atoms diffuse into steel and gather at the metallurgical defect position to generate hydrogen molecules. In this way, high internal stress is generated inside steel, resulting in interfacial crack and hydrogen blistering, and when the pressure of hydrogen continues to increase, small hydrogen bubbles tend to connect with each other, forming a ladder like hydrogen induced cracking

In the wet H2S corrosion environment, the pressure vessel once failed will pose a serious threat to production safety and bring huge economic losses. With quality deterioration of resources, and the trend of large-scale and light-weight design in equipment, the design requires that the steel plate still has good mechanical properties and excellent anti hydrogen cracking (HIC) properties at higher temperatures and longer simulated post weld heat treatment conditions.

At present, most medium-heavy plate enterprises use the design of combination of C, Mn and Si element content, ensure the HIC performance of steel plate by reducing the C, Mn, S, P content, banded structure grade and non-metallic inclusion. With the temperature increasing during simulated post weld heat treatment and extension of time for simulated post weld heat treatment, the tensile strength of the sample after simulated welding heat treatment will decrease markedly. Under the condition of limiting carbon content and microalloying element content, tensile strength is difficult to reach the standard requirement, especially the mechanical properties of head steel plate after hot forming often are unable to restore to the standard performance. To improve the strength of steel plates, the methods, including the forging slab rolling, reducing the content of C, and adding Ni and Cu elements are adopted by some foreign enterprises. Although this method can improve strength of steel plate, but production cycle is longer and results in higher production cost.

Currently there are few patents related to anti-hydrogen-induced-cracking pressure vessel steel used in wet H2S environment. Three heat treatment processes are adopted in general. The invention patent CN104480384A adopts the normalizing and air cooling technology during production, and subsequent cooling in still air during production. The invention patent CN1046411629A adopts the normalizing and air-spray cooling technology. The invention patent CN102605242A adopts the quenching and tempering technology. These three thermal treatment technologies all have a few limitations. Though the normalizing and air cooling technology is beneficial to form uniform microstructure of steel plates, the strength of a sample can hardly meet the requirement after long-time high-temperature simulated post-welding heat treatment; By conducting air-spray cooling after normalizing, the banded structure of steel plates can be improved to a certain extent, but the effect on improving the strength of steel plate is not obvious. Since tempering treatment is not used, a martensitic structure or bainite structure might be generated on the surface of steel plate due to fast cooling, which leads to low strength and high surface hardness of steel plate, and eventually leads to edge cracking of steel plate in container manufacturing process; The quenching and tempering technology can remarkably improve the strength of steel plate, see for example CN102653846B and CN102127719A. However, due to the fact that quenching temperature is high and cooling speed is too fast, it will generate non-uniform microstructure formation of steel plates, and hydrogen-induced-cracking sensitivity is increased. Anti-hydrogen-induced-cracking pressure vessel steels are also known from EP2980238.

Thus, the invention provides anti-hydrogen-induced-cracking pressure vessel steel and a manufacturing method thereof. The anti-hydrogen-induced-cracking pressure vessel steel is suitable for being used in wet H₂S environment, composition design and production process are simple, and it is suitable for mass production , and no patent related to the technology have been found through research.

### Summary of the Invention

The invention aims to solve current technical issues mentioned in the prior art, and provides a type of manufacturing method to produce SA516Gr70(HIC) steel plate with 50 mm thickness, which can be used to produce petrochemical devices, those are able to be applied in a wet H₂S corrosive environment. The steel plate has high strength, and good impact toughness at low temperature, and low hardness, and high anti-HIC performance. The steel plate has fine grain size and less non-metallic inclusion content without obvious banded structure. After long-time high-temperature simulated post-welding heat treatment, the strength and low temperature impact toughness of the steel plate are not reduced obviously, and the steel plate for head end can meet the manufacturing requirements of both cold forming and hot forming processes at the same time.

The technical scheme of the invention is to solve the above problems: a type of Pressure Vessel Steels for Resistance to Hydrogen-Induced Cracking, chemical composition of the steel plate according to the weight percentage of C:0.16 ∼ 0.20%, Si:0.15 ∼ 0.40%, Mn:1.05 ∼ 1.20%, P = 0.008%, S = 0.002%, Nb:: = 0.01%, V = 0.01%. Ti: = 0.01%, B = 0.0005%: balance of Fe and unavoidable impurities, carbon equivalent Ceq less than 0.42%, the carbon equivalent formula: Ceq=C+Mn/6+ (Cr+Mo+V) /5+ (Ni+Cu) /15.

The performance of Resistance to Hydrogen-Induced Cracking of pressure vessel steel plate is that: Resistance to Hydrogen-Induced Cracking test is conducted on the steel plate according to NACE TM0284-2011 "Experimental method for evaluating Resistance to Hydrogen-Induced Cracking performance of pressure vessel steel plate", use solution A to do validation: crack length ratio (CLR), crack thickness ratio (CTR) and crack sensitivity ratio (CSR) of a single inspection section are all equal to 0, and no hydrogen blister is observed, in other words, no defect is obseved after corrosion. After simulated post-welding heat treatment at 635±14°C for 18 h, the yield strength of the steel plate is greater than or equal to 360 Mpa, tensile strength is greater than or equal to 540 Mpa, and transverse Charpy impact energy single value is greater than or equal to 150 J; Brinell hardness of the steel plate surface at delivery-state is less than or equal to 170 HB, the grade of granularity is greater than or equal to grade 8.0, and the grade of banded structure is less than or equal to grade 2.0.

The chemical contents of Pressure Vessel Steels for Resistance to Hydrogen-Induced Cracking (HIC) with 50mm thickness are determined in the way as specified in the description.

The main chemical of the steel plate is the combination of C, Si and Mn, the content of S and P is reduced as much as possible, alloy elements like Cr, Ni, Cu, Mo, Nb, V, Ti and B are not added intentionally. The composition design is simple. Carbon element can remarkably improve the strength and hardness of the steel plate; But with the increase of carbon content, carbide segregation is prone to occur easily, resulting in the hardness of the segregation zone different from the hardness of its surrounding microstructure, leading to HIC corrosion. Mn element can improve the strength of the steel plate through solution strengthening; however, when Mn higher than 1.05%, cracking sensitivity can be increased. but the adverse effect can be eliminated through intercritical quenching and tempering . Silicon is mainly used as reducing agent and deoxidizer in steelmaking, and has certain solid solution strengthening effect; meanwhile, Si element can be easily segregated in grain boundary, and promote intergranular crack generation. With the increase of C, Mn and Si content, the sensitivity of HIC will be increased, but as the major strengthening elements, the contents should be controlled close to upper limits in the allowable range. The control range of the application is C:0.16 ∼ 0.20%, Si:0.15 ∼ 0.40%, Mn:1.05 ∼ 1.20%, and the adverse effects are eliminated by subsequent heat treatment. P and S are harmful elements. With the content of S increases in the steel, the amount of hydrogen entering steel when steel is soaked in H₂S increases too, resulting in the sensitivity of HIC is also increased. When the P content is very low, cracks is nucleated at MnS, but cannot be detected due to small size. However, if the content of P is high (for example, P=0.4%), crack is nucleated and propagates at oxide inclusions and grain boundary even at the condition when the content of S is very low (for example, S=0.001%). Therefore, it is necessary to reduce the content of S and P in steel as much as possible in this application.

Cracks can nucleate and extend on oxide inclusion and grain boundary.

The invention also aims to provide a manufacturing method of the anti-hydrogen-induced-cracking pressure vessel steel plate, as follows:

### (1) Smelting process

Continuous casting slab is adopted for production with using process route: KR pretreatment→ converter smelting process smelting → LF refining→RH refining→continuous casting. Improving purity of molten steel and reduction of slab segregation are the essential measures for resistance to hydrogen-induced cracking of steel. Smelting raw material are pretreated by KR process. Slag-off treatment is conducted after converter smelting process, the content of S is strictly controlled to be less than or equal to 0.001% and P is less than or equal to 0.006%. Non-metallic inclusions of Class A, class B, class C, class D and class Ds in single level is less than or equal to 1, the total sum is less than or equal to 3.5;

Continuous casting with low superheat and full argon protection is adopted. Through dynamic soft pressing technology, the segregation of the casting slab is controlled under level 1 of class B, and the slab is cooled down for more than 48 hours after the slab is formed, in this way it can ensure the full diffusion of hydrogen in the steel.

### (2) Heating and rolling process

A sectional heating method is adopted, total heating time is 225-300 min, the temperature of a first heating section is 1050-1150°C, the temperature of second heating section is 1200-1260°C, the temperature of soaking section is 1170-1250°C, the total heating time of the second heating section together with soaking section is longer than or equal to 120 min, the second heating section and the soaking section are matched to promote sufficient hydrogen diffusion, segregation diffusion and formation of uniform microstructure.

A two-stage rolling technology is adopted, the high-temperature large-reduction rolling technology is adopted in rough rolling stage. In the longitudinal rolling passes, there are at least two passes with single-pass rolling reduction greater than or equal to 50 mm; the accumulated reduction ratio of the finish rolling stage is larger than or equal to 60%, finish rolling temperature is controlled to be 780-820°C, ACC is applied after rolling, and steel plates are stacked and slowly cooled for over 72 h after produced from production line, so that sufficient hydrogen diffusion can be realized.

### (3) Heat treatment technology

The subcritical quenching and tempering technology is adopted, heating temperature during subcritical quenching is Acl-Ac3, quenching temperature is 820-850°C, soaking time factor is 1.8-2.0 min/mm, and water cooling is conducted; in order to prevent the steel plate strength from greatly decreasing after simulated post-welding heat treatment, steel plate tempering temperature is not lower than simulated post-welding heat treatment temperature, tempering temperature is 640-670°C, and soaking time factor is 3.5-4.5 min/mm.

Subcritical quenching can reduce brittle transition temperature and refine grains, so that a proper number of evenly distributed fine ferritic structures can be obtained, crack extension can be inhibited, and steel toughness can be improved remarkably. Compared to conventional quenching technologies, it requires lower tempering temperature to obtain the steel with equal harness, and with higher toughness, to restrain the stress concentration and hinder the crack initiation and propagation; the presence of non molten ferrite in the quenched structure leads to increase the content of carbon and alloy elements in austenite. After quenching, a small amount of stable retained austenite can also prevent the initiation and propagation of cracks. Subcritical quenching can also reduce the segregation of harmful impurity elements at austenite grain boundary, then it can purify the grain boundary.

Compared with the prior art, the advantages of this invention are following:
Our invention relates to the SA516Gr70 (HIC) anti-hydrogen-induced-cracking (HIC) pressure vessel steel plate with 50 mm thickness. The steel plate has high strength, and good impact toughness at low temperature, and low hardness, and high anti-HIC performance. The steel plate has fine grain size and less non-metallic inclusion content without obvious banded structure. After long-time high-temperature simulated post-welding heat treatment, the strength and low temperature impact toughness of the steel plate are not reduced obviously. For the fabrication of pressure vessels, the head is produced by using cold forming process, due to the fact that work hardening can increase the hardness of steel plate, easily lead to cracking of steel plate. The delivery-state hardness of the steel plate is controlled below 170 HB, it can still meet the requirement on cold working after work hardening. Therefore, the steel plate produced by this method can meet the requirements both on cold forming and hot forming processes for head forming process.

In order to achieve the above purpose, the continuous casting process is adopted to reduce the hydrogen induced cracking sensitivity by reducing the segregation of the slab, improving the purity of the molten steel, and reducing the banded structure of the steel plate.

The composition design of the steel plate is simple, the major elements of the steel plate are C, Si and Mn alloy, alloy elements like Ni, Cr, Cu, Mo, Nb, V and Ti are not added intentionally, the design can reduce segregation with low production cost. And the hydrogen-induced cracking sensitivity of the steel plate is reduced by reducing the content of elements S, P, H, O and N, and by improving the purity of molten steel.

Casting blanks are heated with step heating mode, particularly, the total time of the second heating segment and the soaking zone is prolonged, so that segregation diffusion can be achieved sufficiently; by means of the high-temperature large-reduction rolling technology in the high-temperature rolling stage, loose defect can be sufficiently pressed, so that the internal quality of steel plate can be improved.

The unique subcritical quenching and tempering technology is adopted for heat treatment of the steel plate. Compared with the quenching technology and the normalizing technology, heating temperature for subcritical quenching is low, the cooling rate of the cooling process during subcritical quenching is between normalizing temperature and quenching, and strength-toughness properties in steel can be optimized after further high-temperature tempering; in this way, the tensile strength and the low temperature impact toughness of the steel plate can be improved. At the same time, the high surface hardness of steel plate can be avoided, the structure of the steel plate is ferrite and pearlite structure, grain size is small without obvious banded structure exists.

### Description of the Drawings

Fig. 1 is a diagram of a metallurgical structure of a steel plate according to embodiment 1 of the invention;
Fig. 2 is a diagram of a metallurgical structure of a steel plate according to embodiment 2 of the invention;
Fig. 3 is a diagram of a metallurgical structure of a steel plate according to embodiment 3 of the invention.

### Detailed Description of the Invention

Further explanation is made on the invention with reference to the drawings and embodiments.

### Embodiment 1

The thickness of the anti-hydrogen-induced-cracking steel plate for pressure vessel is 50 mm. Its chemical composition is determined by weight percentage: 0.17% of C, 0.34% of Si, 1.18% of Mn, 0.004% of P, 0.0005% of S, 0.00006% of H, 0.0015% of O, 0.0035% of N, and the balance being Fe and inevitable impurity elements. Carbon equivalent Ceq is less than or equal to 0.41%, and the computational formula for the carbon equivalent is Ceq=C+Mn/6+(Cr+Mo+V)/5+(Ni+Cu)/15.

The manufacturing process of the steel plate is as follows:

### (1) Smelting and continuous casting

Continuous casting slabs which have 370 mm in thickness are adopted for production, smelting materials are subjected to KR molten steel pretreatment, converter smelting, LF refining, RH refining and plate slab continuous casting in sequence, Slag-off treatment is conducted after converter steel making, low-superheat pouring with whole-course argon protection is adopted for continuous casting, casting blank segregation is controlled by means of the dynamic soft-reduction technology, and plate slabs are covered and slowly cooled for over 48 h after exiting the line.

### (2) Heating and rolling technologies

A segmented heating method is adopted, total heating time is 270 min, the temperature of a first heating segment is 1120°C, the temperature of a second heating segment is 1250°C, the temperature of a soaking zone is 1240°C, the total heating time of the second heating segment and the soaking zone is 135 min, and sufficient diffusion of casting blank segregation is ensured.

A two-stage rolling technology is adopted, the high-temperature large-reduction rolling technology is adopted in the rough rolling stage, and there are three longitudinal rolling passes with single-pass rolling reduction being 25 mm, 55 mm and 50 mm respectively; porous defect can be sufficiently pressed, so that the internal quality and the core performance of the steel plate can be improved. The accumulated reduction ratio of the finish rolling stage is 65%, finish rolling temperature is controlled to be 810°C, ACC fast cooling is applied after rolling, and steel plates are stacked and slowly cooled for over 72 h after steel plates come out of production line.

### (3) Heat treatment technology

The subcritical quenching and tempering technology is adopted, Acl temperature of the steel plate is 720°C, Ac3 temperature is 850°C, quenching temperature is 835°C, and soaking time factor is 1.8 min/mm; tempering temperature is 660°C, and soaking time factor is 3.8 min/mm.

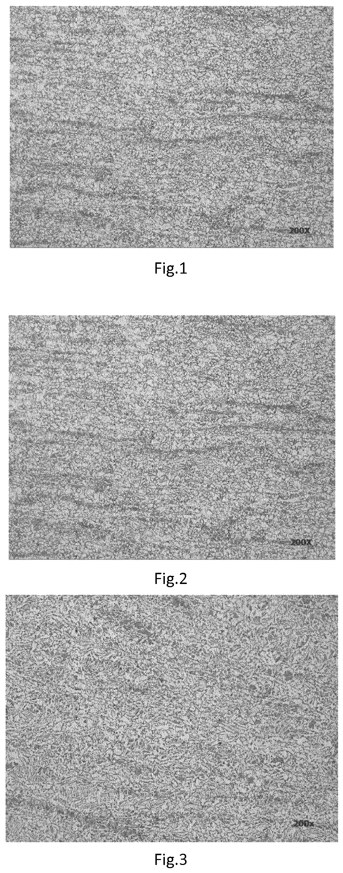

The 50mm thick anti-hydrogen-induced cracking pressure vessel steel plate manufactured with the method has well-matched comprehensive mechanical properties and excellent anti-hydrogen-induced-cracking performance, the mechanical properties are shown in Table 1, the anti-hydrogen-induced-cracking performance is shown in Table 4, and the photo of the metallographic structure is shown in Fig. 1.

### Embodiment 2

The thickness of the anti-hydrogen-induced-cracking steel plate for pressure vessel is 50 mm. Its chemical composition is determined by weight percentage: 0.18% of C, 0.32% of Si, 1.17% of Mn, 0.003% of P, 0.0006% of S, 0.00005% of H, 0.0012% of O, 0.0036% of N, and the balance being Fe and inevitable impurity elements. Carbon equivalent Ceq is less than or equal to 0.41%, and the computational formula for the carbon equivalent is Ceq=C+Mn/6+(Cr+Mo+V)/5+(Ni+Cu)/15.

The manufacturing process of the steel plate is as follows:

### (1) Smelting and continuous casting

Continuous casting slabs which are 370 mm in thickness are adopted for production, smelting materials are subjected to KR=pretreatment, converter smelting, LF refining, RH refining and plate slab continuous casting in sequence, slag off treatment is conducted after converter steel making, low-superheat pouring with whole-course argon protection is adopted for continuous casting, casting blank segregation is controlled by means of the dynamic soft-reduction technology, and plate slabs are covered and slowly cooled for over 48 h after steel plates come out of production line.

### (2) Heating and rolling technologies

A segmented heating method is adopted, total heating time is 285 min, the temperature of a first heating segment is 1125°C, the temperature of a second heating segment is 1255°C, the temperature of a soaking zone is 1242°C, the total heating time of the second heating segment and the soaking zone is 150 min, and sufficient diffusion of casting blank segregation is ensured. a two-stage rolling technology is adopted, the high-temperature large-reduction rolling technology is adopted in the rough rolling stage, and there are three longitudinal rolling passes with single-pass rolling reduction being 25 mm, 55 mm and 55 mm respectively; porous defect can be sufficiently pressed, so that the internal quality and the core performance of the steel plate can be improved. The accumulated reduction ratio of the finish rolling stage is 66%, finish rolling temperature is controlled to be 812°C, ACC=is applied after rolling, and steel plates are stacked and slowly cooled for over 72 h after exiting the line.

### (3) Heat treatment technology

The subcritical quenching and tempering technology is adopted, wherein the subcritical quenching has a quenching temperature of 842°C and soaking time factor of 1.8 min/mm; the tempering has a tempering temperature of 650°C and soaking time factor of 4.0 min/mm.

The 50 mm thick anti-hydrogen-induced-cracking pressure vessel steel plate manufactured with the method has well-matched comprehensive mechanical properties and excellent anti-hydrogen-induced-cracking performance, the mechanical properties are shown in Table 2, the anti-hydrogen-induced-cracking performance is shown in Table 4, and the photo of the metallographic structure is shown in Fig. 2.

### Embodiment 3

The thickness of the anti-hydrogen-induced-cracking steel plate for pressure vessel is 50 mm. Its chemical composition is determined by weight percentage: 0.16% of C, 0.35% of Si, 1.16% of Mn, 0.005% of P, 0.0007% of S, 0.00006% of H, 0.0012% of O, 0.0033% of N, and the balance being Fe and inevitable impurity elements; carbon equivalent Ceq is less than or equal to 0.40%, and the computational formula for the carbon equivalent is Ceq=C+Mn/6+(Cr+Mo+V)/5+(Ni+Cu)/15.

The manufacturing process of the steel plate is as follows:

### (1) Smelting and continuous casting

Continuous casting slabs are adopted for production, smelting materials are subjected to KR pretreatment, converter smelting, LF refining, RH refining and plate slab continuous casting in sequence, slag off treatment is conducted after converter steel making, low-superheat pouring with whole-course argon protection is adopted for continuous casting, casting blank segregation is controlled by means of the dynamic soft-reduction technology, and plate slabs are covered and slowly cooled for over 48 h after steel plates come out of production line.

### (2) Heating and rolling technologies

A segmented heating method is adopted, total heating time is 300 min, the temperature of a first heating segment is 1118°C, the temperature of a second heating segment is 1252°C, the temperature of a soaking zone is 1241°C, the total heating time of the second heating segment and the soaking zone is 150 min, and sufficient diffusion of casting blank segregation is ensured.

A two-stage rolling technology is adopted, the high-temperature large reduction rolling technology is adopted in the rough rolling stage, and there are three longitudinal rolling passes with single-pass rolling reduction being 30 mm, 55 mm and 55 mm respectively; porous defect can be sufficiently pressed, so that the internal quality and the core performance of the steel plate can be improved. The accumulated reduction ratio of the finish rolling stage is 68%, finish rolling temperature is controlled to be 802°C, ACC fast cooling is applied after rolling, and steel plates are stacked and slowly cooled for over 72 h after exiting the line.

### (3) Heat treatment technology

The subcritical quenching and tempering technology is adopted, and the subcritical quenching has a quenching temperature of 840°C and soaking time factor of 1.8 min/mm; the tempering has a tempering temperature of 645°C and soaking time factor of 4.2 min/mm.

The 50 mm thick anti-hydrogen-induced-cracking pressure vessel steel plate manufactured with the method has well-matched comprehensive mechanical properties and excellent anti-hydrogen-induced-cracking performance, the mechanical properties are shown in Table 3, the anti-hydrogen-induced-cracking performance is shown in Table 4, and the photo of the metallographic structure is shown in Fig. 3.

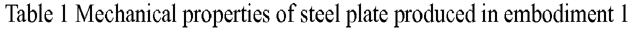

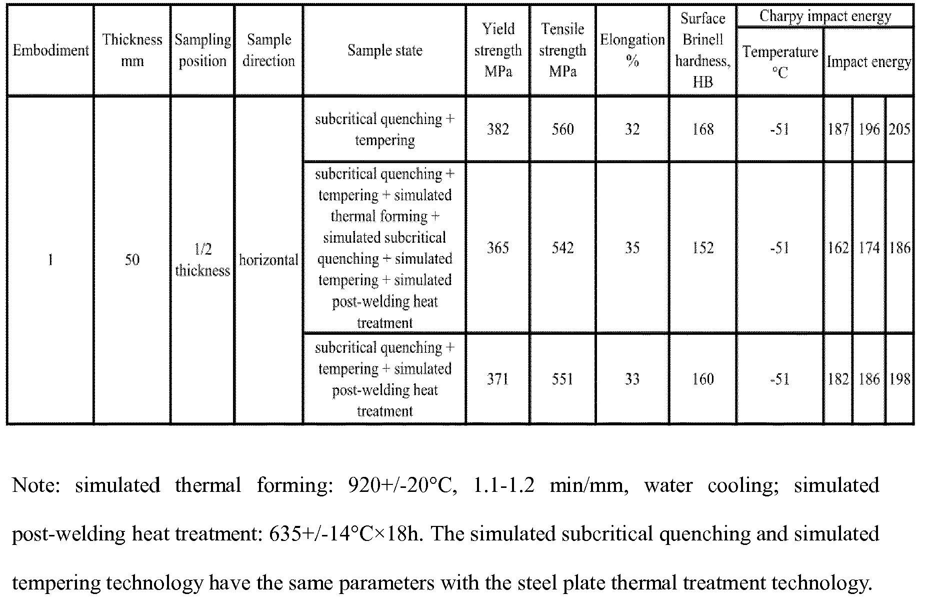

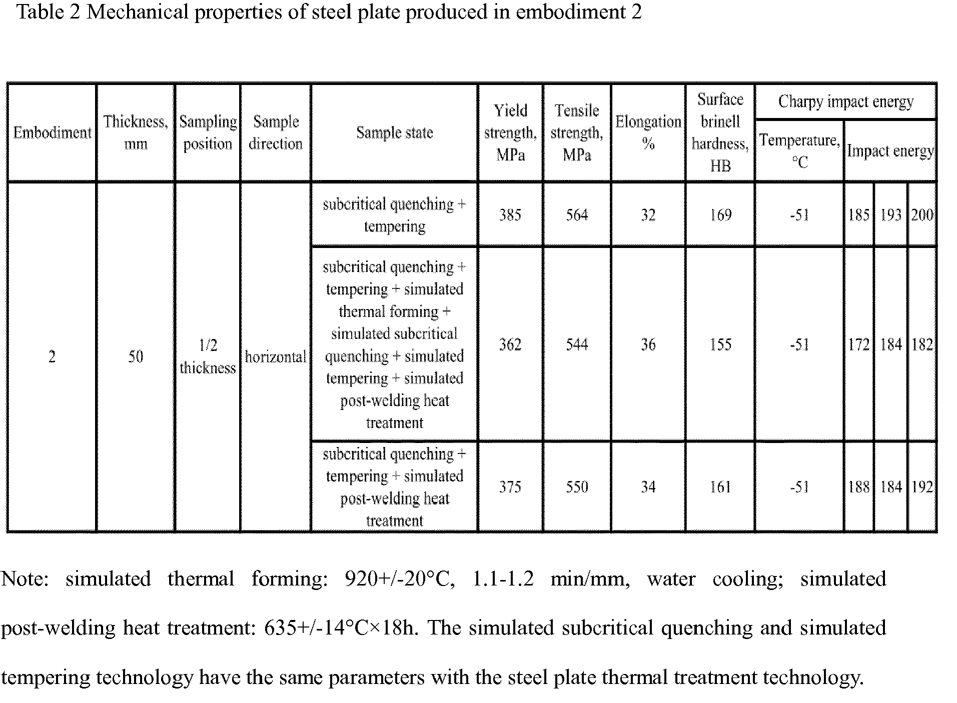

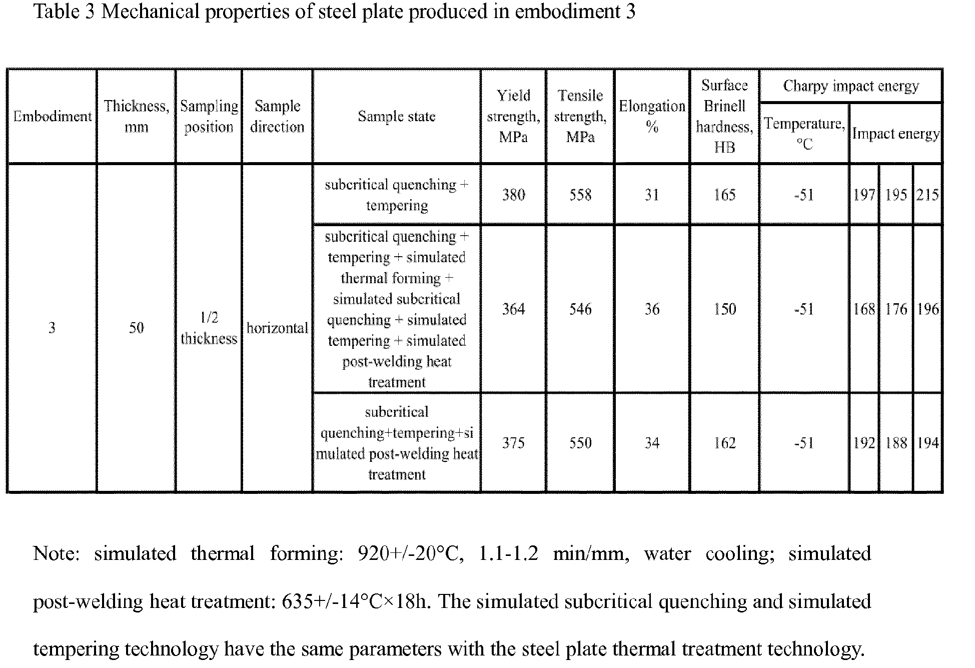

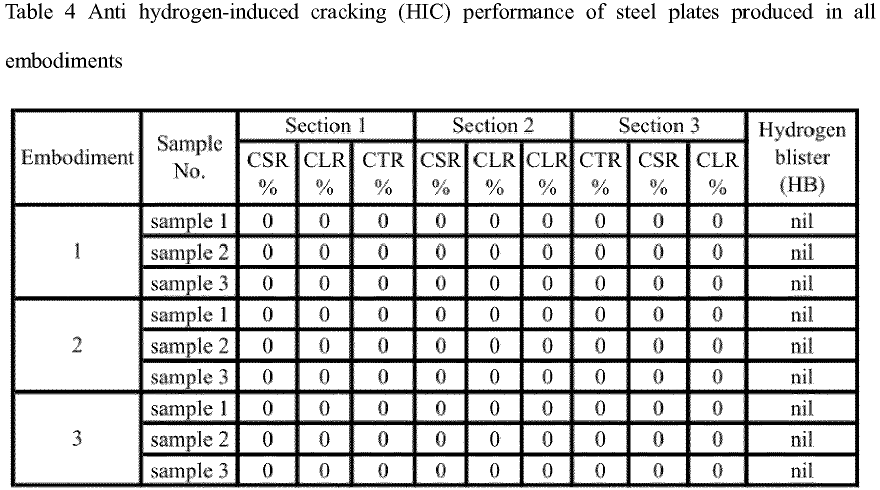

The granularity of the steel plates in all embodiments is grade 8.5, the banded structure is grade 0.5, as shown in Fig. 1-Fig. 3.

## Claims

1. An anti-hydrogen-induced-cracking steel plate for pressure vessels, **characterized by** comprising, chemical composition of the steel plate according to the weight percentage: 0.16-0.20% of C, 0.15-0.40% of Si, 1.05-1.20% of Mn, less than or equal to 0.008% of P, less than or equal to 0.002% of S, less than or equal to 0.01% of Nb, less than or equal to 0.01% of V, less than or equal to 0.01% of Ti, less than or equal to 0.0005% of B, and the balance being Fe and inevitable impurity elements; carbon equivalent Ceq is less than or equal to 0.42%,
and the formula for calculating the carbon equivalent is Ceq=C+Mn/6+(Cr+Mo+V)/5+(Ni+Cu)/15, wherein Cr, Mo, Ni and Cu are not intentionally added,
wherein the anti-hydrogen-induced-cracking pressure vessel steel plate is obtained by a manufacturing method comprising the steps of:
(1) smelting technology
continuous casting slabs are adopted for production with following process route of KR pretreatment, converter smelting, LF refining, RH refining, continuous casting, smelting materials are pretreated with KR molten steel, slag-off treatment is conducted after converter steel making, the content of S is strictly controlled to be less than or equal to 0.001% and P less than or equal to 0.006%, each of Group A, Group B, Group C, Group D and Group Ds nonmetallic inclusions has a chart diagram index of less than or equal to 1.0, and their sum is less than or equal to 3.5; low-superheat pouring with whole-course argon protection is adopted for continuous casting, casting slab segregation B is controlled to be under grade 1.0 by means of the dynamic soft-reduction technology, and plate slabs are covered and slowly cooled for over 48 h after exiting the line, so that hydrogen in steel can diffuse sufficiently;
(2) heating and rolling technologies
a segmented heating method is adopted, total heating time is 225-300 min, the temperature of a first heating segment is 1050-1150°C, the temperature of a second heating segment is 1200-1260°C, the temperature of a soaking zone is 1170-1250°C, and the total heating time of the second heating segment and the soaking zone is longer than or equal to 120 min;
a two-stage rolling technology is adopted, the high-temperature large-reduction rolling technology is adopted in the rough rolling stage, and there are at least two longitudinal rolling passes with single-pass rolling reduction greater than or equal to 50 mm; the accumulated reduction ratio of the finish rolling stage is greater than or equal to 60%, finish rolling temperature is controlled between 780 and 820°C, ACC fast cooling is applied after rolling, and steel plates are stacked and slowly cooled for over 72 h after come out of production line, so that sufficient hydrogen diffusion can be realized;
(3) heat treatment technology
the subcritical quenching and tempering technology is adopted, wherein the subcritical quenching has a quenching temperature of 820-850°C and soaking time factor of 1.8-2.0 min/mm, after that water cooling is conducted; and then tempering, wherein the tempering has a tempering temperature of 640-670°C and soaking time factor of 3.5-4.5 min/mm.

## Patentansprüche

1. Stahlplatte mit anti-wasserstoff-induzierter Rissbildung für Druckbehälter, **dadurch gekennzeichnet, dass** die Stahlplatte die folgende chemische Zusammensetzung gemäß Gewichtsanteilen aufweist: 0,16 - 0,20% C, 0,15 - 0,40% Si, 1,05 - 1,20% Mn, weniger als oder gleich 0,008 % P, weniger als oder gleich 0,002 % S, weniger als oder gleich 0,01 % Nb, weniger als oder gleich 0,01 % V, weniger als oder gleich 0,01 % Ti, weniger als oder gleich 0,005 % B, wobei der Bilanzrest aus Fe und unvermeidbaren Verunreinigungselementen besteht; wobei das Kohlenstoffäquivalent Ceq weniger als oder gleich 0,42% beträgt,
und wobei die Formel zur Berechnung des Kohlenstoffäquivalents Ceq = C + Mn/6 + (Cr + Mo + V)/5 + (Ni + Cu)/15 lautet, wobei Cr, Mo, Ni und Cu nicht gewollt hinzugefügt werden,
wobei die Stahlplatte mit anti-wasserstoff-induzierter Rissbildung für Druckbehälter durch ein Herstellungsverfahren erhalten wird, das die folgenden Schritte aufweist:
(1) Schmelztechnologie
Stranggussbrammen werden eingesetzt zur Herstellung mit dem folgenden Verfahrensweg: KR-Vorbehandlung, Konverterschmelzen, LF-Veredelung, RH-Veredelung, Strangguss, die Schmelzstoffe werden mit KR-Stahlschmelze vorbehandelt, eine Entschlackungsbehandlung wird nach der Konverter-Stahlerzeugung durchgeführt, der Gehalt an S wird derart streng kontrolliert, dass er weniger als oder gleich 0,001% beträgt und der Gehalt an P weniger als oder gleich 0,006% beträgt, wobei jeder der nichtmetallischen Einschlüsse der Gruppe A, Gruppe B, Gruppe C, Gruppe D und Gruppe Ds einen Grafikdiagrammindex von weniger als oder gleich 1,0 aufweist, und wobei ihre Summe weniger als oder gleich 3,5 beträgt; wobei ein niedriges Überhitzungsgießen mit Argon-Schutz über die gesamte Dauer für den Strangguss eingesetzt wird, wobei die Gussbrammentrennung B mittels der dynamischen Soft-Reduktionstechnologie so gesteuert wird, dass sie unter Grad 1,0 liegt, und wobei die Plattenbrammen abgedeckt und langsam über 48 h abgekühlt werden, nachdem sie die Produktionsanlage verlassen haben, so dass der Wasserstoff im Stahl ausreichend diffundieren kann;
(2) Erhitzungs- und Walztechnologien
es wird ein segmentiertes Erhitzungsverfahren eingesetzt, die gesamte Erhitzungsdauer beträgt 225 - 300 Min, die Temperatur eines ersten Erhitzungsabschnitts liegt bei 1050 - 1150°C, die Temperatur eines zweiten Erhitzungsabschnitts liegt bei 1200 - 1260°C, die Temperatur eines Durchtränkungsbereichs liegt bei 1170 - 1250°C, und die Gesamterhitzungsdauer des zweiten Heizabschnitts und der Durchtränkungszone ist länger als oder gleich 120 Min;
es wird eine zweistufige Walztechnologie eingesetzt, die Hochtemperatur-Walztechnologie mit starker Reduktion wird in der Grobwalzstufe eingesetzt, und es gibt mindestens zwei Längswalzdurchgänge mit einer Reduktion im Einzelwalzdurchgang von mehr als oder gleich 50 mm; das akkumulierte Reduktionsverhältnis der Endwalzstufe ist größer als oder gleich 60%, die Endwalztemperatur wird so gesteuert, dass sie zwischen 780 und 820°C liegt, eine ACC-Schnellkühlung wird nach dem Walzen verwendet und die Stahlplatten werden aufgestapelt und langsam über 72 h abgekühlt, nachdem sie die Produktionsanlage verlassen haben, so dass eine ausreichende Wasserstoffdiffusion stattfinden kann;
(3) Wärmebehandlungstechnologie
es wird eine unterkritische Vergütungstechnologie eingesetzt, wobei das unterkritische Abschrecken bei einer Abschrecktemperatur von 820 -850°C stattfindet, und wobei der Durchtränkungszeitfaktor bei mindestens 1,8-2,0 Min/mm liegt, nachdem die Wasserkühlung durchgeführt worden ist; und dann wird eine Vergütung durchgeführt, wobei die Vergütung bei einer Temperatur von 640-670°C und mit einem Durchtränkungszeitfaktor von mindestens 3,5-4,5 Min/mm stattfindet.

## Revendications

1. Plaque d'acier protégée contre la fissuration induite par l'hydrogène pour des réservoirs sous pression, **caractérisée en ce que** la plaque d'acier comprend la composition chimique suivante exprimée en pourcentage du poids : 0,16 - 0,20% de C, 0,15 - 0,40% de Si, 1,05 - 1,20 % de Mn, moins de ou égale à 0,008% de P, moins de ou égale à 0,002% de S, moins de ou égale à 0,01% de Nb, moins de pu égale à 0,01% de V, moins de ou égale à 0,01% de Ti, moins de ou égale à 0,005% de B, le reste étant du Fe et des éléments d'impureté inévitables ; l'équivalent de carbone Ceq étant moins de ou égale à 0,42%,
et la formule destinée à calculer l'équivalent de carbone est : Ceq = C + Mn/6 + (Cr + Mo + V)/5 + (Ni + Cu)/15, Cr, Mo, Ni et Cu n'étant pas ajoutés de manière intentionnelle,
dans lequel la plaque d'acier protégée contre la fissuration induite par l'hydrogène pour des réservoirs sous pression st obtenue par moyen d'un procédé de fabrication comprenant les étapes suivantes de :
(1) technologie de fusion
des plaques de coulée continue sont utilisées pour la fabrication comprenant le déroulement de production suivant : un prétraitement KR, une fusion de convertisseur, un raffinage LF, un raffinage RH, la coulée continue, des matériaux de fusion sont prétraités avec de l'acier fondu KR, un traitement de décharge de mâchefers est effectué après la fabrication d'acier dans le convertisseur, la teneur en S est strictement contrôlée pour être inférieure ou égale à 0,001% et la teneur en P doit être inférieure ou égale à 0,006%, chacune des inclusions non-métalliques du groupe A, du groupe B, du groupe C, du groupe D et du groupe Ds a un indice de diagramme de graphique de moins de ou égale à 1,0 et leur somme est inférieure ou égale à 3,5 ; la coulée à surchauffe faible avec une protection d'argon pendant la fabrication entière est utilisée pour la coulée continue , la ségrégation des plaques coulées B est commandée de sorte qu'elle reste au-dessous d'un degré de 1,0 par moyen de la technologie de réduction douce dynamique, et les plaques sont couvertes et refroidies lentement pendant 48 h après être sorties de l'installation de production, de sorte que l'hydrogène dans l'acier peut diffuser de manière suffisante ;
(2) technologies de chauffage et de laminage
un procédé de chauffage segmenté est utilisé, la durée de chauffage totale est 225 -300 min, la température du premier segment de chauffage est comprise entre 1050 et 1150°C, la température du deuxième segment de chauffage est comprise entre 1200 et 1260°C, la température d'une zone de trempage est comprise entre 1170 et 1250°C et la durée totale de chauffage du deuxième segment de chauffage et de la zone de trempage est supérieure ou égale à 120 min ;
une technologie de laminage à deux étapes est utilisée, la technologie de laminage de forte réduction à température élevée est utilisée dans l'étape de laminage brut, et il y a au moins deux passes de laminage longitudinale avec une réduction de laminage pendant une seule passe de supérieure ou égale à 50 mm ; le rapport de réduction accumulée de l'étape de laminage final est supérieur ou égale à 60%, la température du laminage final est fixée entre 780 et 820°C, un refroidissement rapide ACC est appliqué après le laminage et les plaques d'acier sont empilées et refroidies lentement pendant 72 h après être sorties de l'installation de production, de sorte qu'une diffusion suffisante de l'hydrogène peut être réalisée ;
(3) technologie de traitement de chauffage
on utilise la technologie de trempe et de revenu subcritique, dans lequel la trempe subcritique comprend une température de trempe comprise entre 820 et 850°C et un facteur de temps de trempage de 1,8 - 2,0 min/mm, après que le trempage à l'eau soit effectué, et ensuite le revenu, dans lequel le revenu comprend une température de revenu comprise entre 640 et 670°C et un facteur de temps de trempage de 3,5 - 4,5 min/mm.
